Europäisches Patentamt

European Patent Office

Office européen des brevets

(19)

(11) Veröffentlichungsnummer: **0 140 989**
**B1**

(12) **EUROPÄISCHE PATENTSCHRIFT**

(45) Veröffentlichungstag der Patentschrift:
**03.06.87**

(51) Int. Cl.⁴: **A 01 B 33/08**

(21) Anmeldenummer: **83111008.5**

(22) Anmeldetag: **04.11.83**

(54) **Bodenbearbeitungsmaschine.**

(43) Veröffentlichungstag der Anmeldung:
**15.05.85 Patentblatt 85/20**

(45) Bekanntmachung des Hinweises auf die Patenterteilung:
**03.06.87 Patentblatt 87/23**

(84) Benannte Vertragsstaaten:
**AT BE CH DE FR GB IT LI NL SE**

(56) Entgegenhaltungen:
**CH - A - 182 307**
**DE - A - 3 211 407**
**DE - C - 262 958**
**DE - C - 263 304**
**DE - C - 520 486**
**DE - C - 845 904**
**FR - A - 1 390 713**
**FR - A - 1 603 228**
**US - A - 2 438 189**
**US - A - 2 638 830**
**US - A - 3 066 743**
**US - A - 3 128 831**

(73) Patentinhaber: **Schäfer, Winfried,**
**Kirchgrabenstrasse 18, D-6234 Hattersheim 3 (DE)**
Patentinhaber: **Schäfer, Thomas, Kirchgrabenstrasse 18,**
**D-6234 Hattersheim 3 (DE)**

(72) Erfinder: **Schäfer, Winfried, Kirchgrabenstrasse 18,**
**D-6234 Hattersheim 3 (DE)**
Erfinder: **Schäfer, Thomas, Kirchgrabenstrasse 18,**
**D-6234 Hattersheim 3 (DE)**

(74) Vertreter: **Blumbach Weser Bergen Kramer Zwirner**
**Hoffmann Patentanwälte, Sonnenbergerstrasse 43,**
**D-6200 Wiesbaden 1 (DE)**

## Beschreibung

Die Erfindung betrifft eine Bodenbearbeitungsmaschine mit rotierenden Werkzeugen, insbesondere mit einem Messer oder Zinken tragenden Rotor, der mit einem Eigenantrieb versehen oder über eine Antriebswelle mit einer Zugmaschine verbunden ist, wobei der Antrieb über ein Differentialgetriebe verzweigt ist, eine Rutschkupplung aufweist und den Rotor an zwei Stellen antreibt.

Derartige Bodenbearbeitungsmaschinen, in der Landwirtschaft allgemein mit «Fräsen» bezeichnet, dienen der Bodenlockerung und erweisen sich als besonders vorteilhaft zum Einarbeiten von Stroh und Gründüngung.

Wenn die auf dem Rotor angebrachten, verhältnismässig empfindlichen und relativ schnell laufenden Werkzeuge gegen einen Widerstand, beispielsweise einen grösseren Stein, stossen, besteht die Gefahr, dass das Gerät, die Werkzeuge oder die Kraftübertragungsteile beschädigt werden. Aus diesem Grund wird das Maschinengewicht der Fräse gering gehalten, was ein Überrollen solcher Hindernisse erleichtert.

Es ist bereits bekannt geworden, allgemein bei Antriebsvorrichtungen für die durchgehende Hauenwelle von Landbaumotoren die Vorlegewelle für den Antrieb der Hauenwelle zu unterteilen und zwischen diesen Teilen ein Differentialgetriebe einzuschalten (DE-C-262 958, US-A-2 638 830). Dabei ist es auch bekannt, zwischen dem Differentialgetriebe und der einen Vorlegewellenhälfte eine bei einem einstellbaren maximalen Widerstand selbsttätig ausser Wirksamkeit tretende Kupplung einzuschalten (DE-C-263 304, 520 486).

Damit ist aber eine nicht zuverlässige Antriebsverbindung zwischen Antriebswelle und Bodenbearbeitungsmaschine vorhanden. Es tritt bei der Rutschkupplung ein verhältnismässig schneller Verschleiss auf, da die gesamte Arbeitskraft von ihr übertragen werden muss, und schliesslich kommt gegebenenfalls die gesamte Bodenbearbeitungsmaschine zum Stillstand.

Der Erfindung liegt daher die Aufgabe zugrunde, eine Bodenbearbeitungsmaschine verfügbar zu machen, bei der die obengenannten Nachteile vermieden sind, indem die Maschine mindestens teilweise auch dann weiterarbeitet, wenn an einem Werkzeug ein Hindernis auftritt, wobei das in konstruktiv wenig aufwendiger Weise erzielt werden soll.

Die Erfindung besteht darin, dass bei einer Bodenbearbeitungsmaschine der eingangs genannten Art der Rotor zwischen den Antriebsstellen geteilt ist und dass die getrennt angetriebenen Rotorteile durch eine Rutschkupplung miteinander verbunden sind.

Die Rutschkupplung ist in vorteilhafter Weise einstellbar, so dass ein einstellbarer Teil der Differentialverteilungskräfte direkt am Rotor blockiert wird, um bei Normalbetrieb Gleichlauf der Rotoren zu erzielen. Im einzelnen kann auf verschiedene Weise die Einstellung der Rutschkupplung durch Erhöhung oder Verminderung von Reibungskräften erzielt werden, auch ist es möglich, eine Torsionsfeder vorzusehen.

Eine zweckmässige Ausführungsform besteht darin, dass die Rutschkupplung Schalen aufweist, die die beiden Rotorteile umschliessen, so dass die Rotorteile axial und auf Biegung stabilisiert sind.

Eine Weiterbildung der Erfindung besteht darin, dass die schmalen Getriebekästen zum Antrieb der Rotorwelle so ausgebildet sind, dass sie auf beiden Seiten Antriebsflansche zur Aufnahme der Rotoren tragen. Hierdurch wird es möglich, den zwischen den Antriebskästen laufenden, geteilten und durch die Rutschkupplungsschalen stabilisierten Rotor in gleicher oder ähnlicher Form und Ausführung zusätzlich auf die Aussenflansche zu schrauben, so dass eine Maschine doppelter Arbeitsbreite mit statisch günstiger Rotorlage entsteht, wobei die überstehenden Rotorteile Verkehrserfordernissen entsprechend abnehmbar sein können. Auch wird damit ein schneller Wechsel auf andere Fräsrotoren, die andere bodenspezifische Werkzeuge tragen, ermöglicht.

Um verschiedenen Erfordernissen bei der Bodenbearbeitung Rechnung zu tragen, besteht eine Fortbildung der Erfindung darin, dass die Rotorteile um 180° gedreht montierbar sind und eine Einrichtung vorgesehen ist, die der Rotordrehung eine gegenläufige Richtung erteilt. Hierdurch wird eine neue Art des Gegenlauffräsens ermöglicht, bei der das Schneiden der Messer und die Vorschubrichtung sich in gleicher Richtung bewegen. Das herausgeschnittene Erdreich wird bei dieser Art zu fräsen vom Messer über den Rotor gehoben und hinter ihm abgelegt. Dadurch wird das beim normalen Gleichlauffräsen entstehende Problem der Vorschubbegrenzung weitgehend vermieden, das dadurch entsteht, dass die Messer, die das Erdreich abschneiden, mit einem konstruktiv begrenzten Freiwinkel versehen sein müssen. Hier jedoch wird bei gleichem Rotordurchmesser eine grössere Frästiefe ermöglicht, da beim Herausschneiden des Erdstückes von unten nach oben ein Vorbrechen der Erde in Fahrtrichtung ermöglicht wird.

Mit Vorteil kann der schmale Getriebekasten innerhalb des radialen Arbeitsbereichs des Rotors in Arbeitsrichtung mit einer entsprechenden Grubberschare versehen sein. Dadurch wird der schmale, ca. 10 cm breite Bodenstreifen, auf dem der Getriebekasten abläuft, mitbearbeitet, indem die Schare das Erdreich dieses Bereichs im benachbarten Rotormesser zur Zerkleinerung zuführt.

Die Erfindung soll nachstehend anhand von Ausführungsbeispielen unter Bezugnahme auf die beigefügten Zeichnungen näher erläutert werden. In den Zeichnungen zeigen:

Fig. 1 das Schema eines Antriebs der Fräsrotoren einer erfindungsgemässen Bodenbearbeitungsmaschine, perspektivisch gesehen;

Fig. 2 die Darstellung der Arbeitsweise eines Fräsrotors im Boden;

Fig. 3 die perspektivische Ansicht eines Fräsrotors mit Sicht auf den Aufnahmeflansch;

Fig. 4 die Darstellung der Arbeitsweise der Grubberschare am Getriebekasten im Boden;

Fig. 5 eine Schnittdarstellung der Schalenkupplungsverbindung der Rotoren.

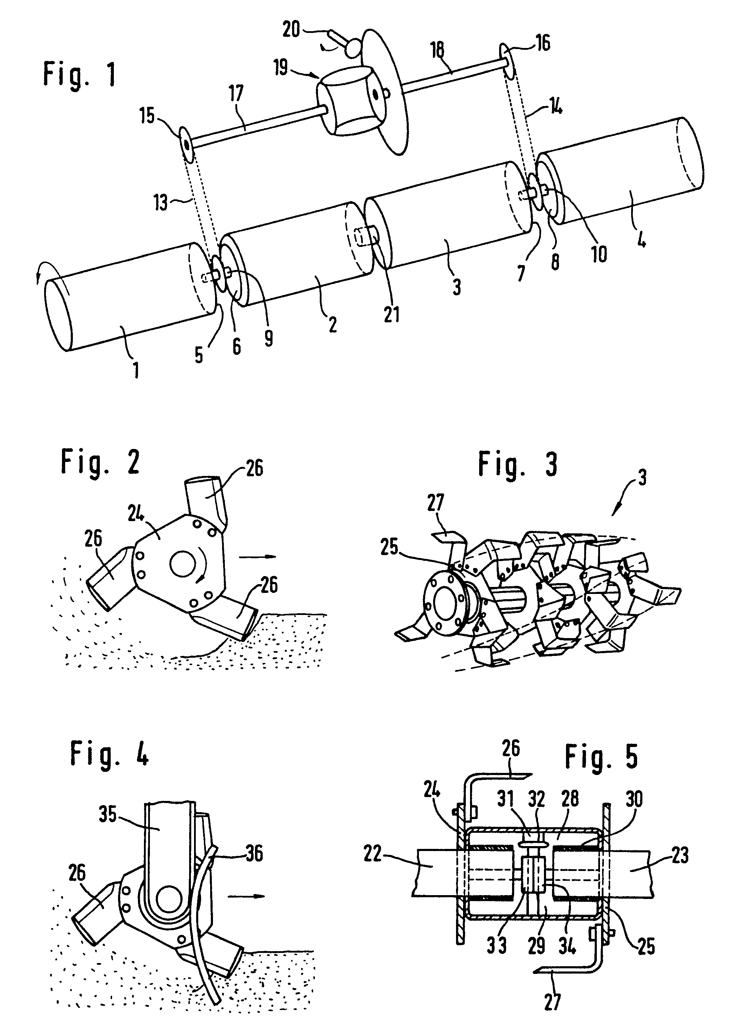

In Fig. 1 ist in schematischer Darstellung das Antriebssystem einer Bodenbearbeitungsmaschine dargestellt, die vier gleichartige Fräsrotoren 1 bis 4 besitzt. Die Fräsrotoren 1 und 2 weisen sich gegenüberliegende Flanschscheiben 5 bzw. 6 auf, und die Fräsrotoren 3 und 4 besitzen sich gegenüberliegende Flanschscheiben 7 und 8. Die Flanschscheiben 5 und 6 weisen eine gemeinsame Welle 9 und die Flanschscheiben 7 und 8 eine entsprechend gemeinsame Welle 10 auf. Die Wellen 9 und 10 sind in Getriebekästen gelagert, die in Fig. 1 nicht dargestellt sind. Die Seitenansicht eines Getriebekastens 35 ist jedoch in Fig. 4 zu sehen. Über die Flanschscheiben 5 und 6 sind die Rotoren 1 und 2 an der Welle 9 befestigt, und in entsprechender Weise sind die Rotoren 3 und 4 über ihre Flanschscheiben 7 bzw. 8 an der Welle 10 befestigt. Die Wellen 9 und 10 tragen ein Kettenrad und werden über Ketten 13 bzw. 14 angetrieben. Zu diesem Zweck ist für die Kette 13 ein Gegenrad 15 auf einer Steckachse 17 befestigt, und die Kette 14 läuft über ein Gegenrad 16, das auf einer Steckachse 18 befestigt ist. Die Steckachsen 17 und 18 bilden den Teil eines Kegelraddifferentials 19, wie es von einer Hinterradantriebsstarrachse bei einem Automobil bekannt ist. Der Antrieb des Differentials 19 erfolgt durch einen nicht dargestellten Motor, gegebenenfalls über Kupplung und Getriebe, mit einer Drehrichtungsumkehrmöglichkeit über die Antriebswelle 20.

Die Rotoren 2 und 3 sind mit einer Kupplung 21 verbunden, die in Fig. 5 im Schnitt dargestellt ist. In Fig. 5 sind bei 22 und 23 die abgebrochenen Enden der Fräsrotoren 2 und 3 nach Fig. 1 wiedergegeben. Der Fräsrotor 2 trägt einen Messerflansch 24, an dem ein Winkelmesser 26 befestigt ist, und in gleicher Weise trägt der Rotor 3 einen Messerflansch 25 mit einem daran befestigten Winkelmesser 27. In Fig. 3 ist ein Fräsrotor, beispielsweise der Rotor 3, mit einer Vielzahl von Messerflanschen 25 und daran befestigten Winkelmessern 27 dargestellt.

Die Kupplung selbst besteht aus den beiden Kupplungshälften 28 und 29, die Bremsbeläge 30 aufweisen. Die Kupplung wird durch einstellbare Schrauben 31 und Tellerfedern 32 auf die Rotorenden 22 und 23 gepresst und bildet so eine justierbare Reibungskupplung zwischen den Fräsrotoren 2 und 3, an denen die Fräsrotoren 1 bzw. 4 befestigt sind, wobei die Knopfansätze 33 und 34 die Axiallast übernehmen. In Fig. 2 ist in seitlicher Ansicht ein Messerflansch 24 zu sehen, an dem Winkelmesser 26 befestigt sind. Bei einer Drehung im Uhrzeigersinn und einer Fahrtrichtung nach rechts in Fig. 2 ergibt sich die dargestellte Bodenbearbeitung.

In Fig. 4 ist gezeigt, wie an einem Getriebekasten 35, der die in Fig. 1 dargestellten Ketten 13 bzw. 14 umschliesst, ein Grubbereisen 36 angebracht ist, das das Erdreich unter dem Getriebekasten 35, das nicht von den Messern 26 des Fräsrotors 2 erreicht wird, hochfördert und den Fräsmessern 26 zur Zerkleinerung zuführt.

Die Rotoren 1 und 4 können an den Antriebswellen 9 bzw. 10 ansteckbar ausgestaltet sein, so dass es möglich ist, die Rotoren 1 und 4 zu entfernen, um beispielsweise aus verkehrstechnischen Gründen die Breite der Bodenbearbeitungsmaschine zu verringern. Auch ist es möglich, die Rotoren 1 bis 4 um 180° gedreht zu montieren, so dass mit Hilfe einer Einrichtung, die der Antriebswelle 20 eine gegenläufige Richtung erteilt, die in der Beschreibungseinleitung bereits dargelegten Vorteile erzielt werden.

Bei der obenbeschriebenen Bodenbearbeitungsmaschine erhalten die Rotoren 1 und 2 über das Differential 19, die Antriebswelle 20 und das Gegenrad 15 sowie die Kette 13 und die Welle 9 ihren Antrieb, während die Rotoren 3 und 4 ebenfalls vom Differential 19 ausgehen, über die Welle 18, das Gegenrad 16, die Kette 14 sowie die Welle 10 angetrieben werden. Auf diese Weise erhalten die Rotoren 1 bis 4 einen Antrieb von den beiden Wellen 9 und 10, und die Kupplung 21 zwischen den beiden Rotoren 2 und 3 ermöglicht dann einen Schlupf, wenn beispielsweise ein Messer 26 des Rotors 2 auf einen Widerstand trifft, so dass eine erhöhte Kraft über das Differential 19, die Welle 18, die Kette 14 und die Welle 10 auf die Rotoren 3 und 4 abfliessen kann. Diese Rotoren können weiterarbeiten, und durch das Weiterbewegen der Maschine bewegt sich das Messer 26 an dem Hindernis, beispielsweise einem Stein, vorbei, und nach Wegfall des Widerstandes arbeitet die Maschine normal weiter, indem die Kraft auf die Antriebswelle 20 gleichmässig über das Differential 19 zu den beiden Achswellen 9 und 10 abfliesst.

Die erfindungsgemässe Bodenbearbeitungsmaschine zeichnet sich somit neben einer vielseitigen Anpassungsfähigkeit an die unterschiedlichsten Erfordernisse durch verbesserte Betriebseigenschaften und insbesondere einen geringeren Verschleiss aus. Dabei ist die Erfindung wenig aufwendig und zweckmässig, indem serienmässige Leichtbauautomobilstarrhinterachsen Verwendung finden können. An diese werden leichte und stabile Getriebekästen 35 z.B. aus fadenverstärkten Kunststoffen angebracht, so dass sich ein besonders geringes Fräsengewicht ergibt, das bei geeigneter, drehbarer Aufhängung der Fräse an einem Führungswagen, der auch Antrieb mit Kupplung und Schaltgetriebe trägt, ein kontrolliert einstellbares Ausweichen der Fräse nach hinten und oben beim Auftreffen auf Hindernisse ermöglicht. Es wird besonders bemerkt, dass ein Hintereinanderschalten von Fräsrotoren, die auch gegenläufig arbeiten können, gemäss der Erfindung durch mehrfache Differentialantriebsteilung möglich ist.

**Patentansprüche**

1. Bodenbearbeitungsmaschine mit rotierenden Werkzeugen, insbesondere mit einem Messer oder Zinken (26) tragenden Rotor (1-4), der mit einem Eigenantrieb versehen oder über eine Antriebswelle mit einer Zugmaschine verbunden ist, wobei der Antrieb über ein Differentialgetriebe (19) verzweigt ist, eine Rutschkupplung (21) aufweist und den Rotor an zwei Stellen (9, 10) antreibt, dadurch gekennzeichnet, dass der Rotor (2, 3) zwischen den Antriebsstellen (9, 10) geteilt ist und dass die getrennt angetriebenen Rotorteile (22, 23) durch die Rutschkupplung (21) miteinander verbunden sind.

2. Maschine nach Anspruch 1, dadurch gekennzeichnet, dass die Rutschkupplung (21) einstellbar ist und/oder über eine Torsionsfeder verbunden ist.

3. Maschine nach einem der Ansprüche 1 oder 2, dadurch gekennzeichnet, dass die Rutschkupplung (21) Schalen (28, 29) aufweist, die die beiden Rotorteile (22, 23) umschliessen, so dass die Rotorteile axial und auf Biegung stabilisiert sind.

4. Maschine nach einem der Ansprüche 1 bis 3, dadurch gekennzeichnet, dass die beiden Rotorteile (22, 23) hohl ausgebildet sind und dass sich durch diese eine gemeinsame Welle erstreckt.

5. Maschine nach einem der Ansprüche 1 bis 4, dadurch gekennzeichnet, dass der Rotor (2, 3) sich seitlich über die Antriebsstellen (9 bzw. 10) hinaus erstreckt.

6. Maschine nach Anspruch 4, dadurch gekennzeichnet, dass an das äussere Ende des Rotors (2, 3) Verlängerungsteile (1 bzw. 4) ansetzbar bzw. abnehmbar sind.

7. Maschine nach Anspruch 6, dadurch gekennzeichnet, dass sich die Verlängerungsteile (1, 4) von den Antriebsstellen (9 bzw. 10) nach aussen erstrecken.

8. Maschine nach einem der Ansprüche 1 bis 7, dadurch gekennzeichnet, dass die Rotorteile (1 bis 4) um 180° gedreht montiert sind und dass eine Einrichtung vorgesehen ist, die der Rotordrehung eine gegenläufige Richtung erteilt.

9. Maschine nach einem der Ansprüche 1 bis 8, dadurch gekennzeichnet, dass der Getriebekasten (35) im Bereich des Rotorantriebs (9 bzw. 10) eine Grubberschare (36) trägt.

## Claims

1. A soil-working machine or implement having rotating tools, more particularly a rotor (1-4) carrying blades or tines (26), the rotor either being self-propelled or being connected by way of a drive shaft to a draught machine, the drive being divided by way of a differential transmission (19), having a slipping clutch (21) and driving the rotor at two places (9, 10), characterised in that the rotor (2, 3) is divided between the drive input places (9, 10) and the separately driven rotor parts (22, 23) are interconnected by way of the slipping clutch (21).

2. A machine according to claim 1, characterised in that the clutch (21) is adjustable and/or connected by way of a torsion spring.

3. A machine according to claim 1 and/or 2, characterised in that the clutch (21) has shells (28, 29) which so extend around the two rotor parts (22, 23) that the same are stabilized axially and for bending.

4. A machine according to any of claims 1-3, characterised in that the two rotor parts (22, 23) are hollow and a common shaft extends through them.

5. A machine according to any of claims 1-4, characterised in that the rotor (2, 3) extends laterally beyond the drive input places (9, 10 respectively).

6. A machine according to claim 4, characterised in that extension members (1, 4) can be fitted to or removed from the outer end of the rotor (2, 3 respectively).

7. A machine according to claim 6, characterised in that the extension members (1, 4) extend outwardly from the drive input places (9, 10 respectively).

8. A machine according to any of claims 1-7, characterised in that the rotor parts (1-4) are assembled at a 180° offset and means are provided to enable the rotor parts to rotate to opposite hands.

9. A machine according any of claims 1-8, characterised in that the gearbox (35) has a grubber share (36) near the rotor drive (9, 10).

## Revendications

1. Machine pour le travail du sol avec des outils rotatifs, en particulier avec un rotor (1-4) portant une lame ou dent (26), qui comporte un entraînement propre ou qui est relié par l'intermédiaire d'un arbre d'entraînement à un tracteur, l'entraînement étant subdivisé au moyen d'un engrenage différentiel (19), comportant un accouplement à glissement (21) et actionnant le rotor en deux endroits (9, 10), caractérisée en ce que le rotor (2, 3) est divisé entre les points d'entraînement (9, 10) et en ce que les parties séparément actionnées du rotor (22, 23) sont reliées entre elles au moyen de l'accouplement à glissement (21).

2. Machine selon revendication 1, caractérisée en ce que l'accouplement à glissement (21) est réglable et/ou relié par un ressort de torsion.

3. Machine selon l'une des revendications 1 ou 2, caractérisée en ce que l'accouplement à glissement (21) présente des enveloppes (28, 29) entourant les deux parties de rotor (22, 23) de sorte que ces parties sont stabilisées axialement et en flexion.

4. Machine selon l'une des revendications 1 à 3, caractérisée en ce que les deux parties de rotor (22, 23) sont creuses et traversées par un arbre commun.

5. Machine selon l'une des revendications 1 à 4, caractérisée en ce que le rotor (2, 3) s'étend latéralement au delà des points d'entraînement (9, 10).

6. Machine selon revendication 4, caractérisée en ce que des parties de rallonge (1, 4) sont montées de façon amovible sur les extrémités du rotor (2, 3).

7. Machine selon revendication 6, caractérisée en ce que les parties de rallonge (1, 4) s'étendent, en partant des points d'entraînement (9, 10) vers l'extérieur.

8. Machine selon l'une des revendications 1 à 7, caractérisée en ce que les parties de rotor (1 à 4) sont montées tournées de 180° et qu'un dispositif est prévu communiquant une direction contrarotative à la rotation du rotor.

9. Machine selon l'une des revendications 1 à 8, caractérisée en ce que le carter de transmission (35) porte une dent de cultivateur (36) dans la zone d'entraînement du rotor (9, 10).

Fig. 1

Fig. 2

Fig. 3

Fig. 4

Fig. 5